# EUROPEAN PATENT APPLICATION

(11) **EP 4 810 192 A1**
(43) Date of publication of application: **23.09.2026**
(21) Application number: 25887450.2
(22) Date of filing: 23.09.2025
(51) Int. Cl.: B23P 19/06

(54) **MULTI-SPINDLE TIGHTENING APPARATUS**

(30) Priority: 24.01.2025 CN 202510113124; 25.04.2025 CN 202520880048 U
(71) Applicant: Zibo Changliu Industrial Technology Co., Ltd., Zibo, Shandong 255000 (CN)
(72) Inventor: LIU, Zhigang, Zibo, Shandong 255000 (CN); CHEN, Jimeng, Zibo, Shandong 255000 (CN)
(74) Representative: Bewley, Ewan Stuart
(86) International application number: PCT/CN2025/123250
(87) International publication number: WO 2026/157290

(57) **Abstract**

A multi-axis tightening device comprising a device input shaft 10 and a plurality of tightening heads 11, the device is provided with a plurality of transmission units 20, each transmission unit is provided with a first unit output shaft 21, a second unit output shaft 22 and an unit input shaft 23, the unit input shaft 23 drives the first unit output shaft 21 and the second unit output shaft 22 to rotate, the first unit output shaft 21 and the second unit output shaft 22 of the transmission unit drive the unit input shaft 23 of another said transmission unit or drive the said tightening head 11. This invention employs a plurality of transmission units of three-axis structure, the three axes of the transmission unit can be in associated transmission to form a chain type transmission structure, a multi-axis torque transmission device of one input shaft and a plurality of output shafts is formed, the plurality of output shafts can simultaneously twist a plurality of operating subjects, one-time input rotating operation can output twisting for the plurality of operating subjects, untightened bolts are prevented from being omitted and the torsion strength of a plurality of torsion subjects can be adjusted.

## Description

### Technical Field

The present invention relates to the field of mechanical transmission and installation, and in particular to a multi-axis tightening device.

### Background Technology

In mechanical installation and pipeline construction, bolt tightening operations are a critical and labor-intensive task, especially at pipeline or pressure vessel flange connections. Traditional bolt tightening operations usually must follow strict standards and specifications (such as ASME PCC-1), requiring bolts to be tightened in a specific diagonal sequence and in gradual stages. This process not only consumes a large amount of time and manpower but is also easily limited by the operator's experience and tool precision, leading to human errors. For example, missed tightening of bolts can easily occur during the tightening process. In severe cases, this may affect the sealing performance and pressure resistance of the pipeline connection, thereby threatening the safety and installation quality of the equipment.

Although in the automotive assembly field, some technologies have attempted to solve similar multi-point fastening problems-typically by using a single input shaft to drive multiple output shafts to achieve synchronous rotation of multiple bolts-these devices have significant limitations. For example, once one bolt is tightened, the other bolts cannot continue to rotate, meaning it is impossible to evenly control the tightening force of multiple bolts at the same time.

Another common solution is to use a multi-axis tightening tool with multiple independent electronically controlled servo torque heads. Each servo torque head is responsible for tightening one bolt individually and can adjust the tightening torque as needed. Although this method can partially solve the torque control problem, its structure is relatively complex and the cost is very high.

Based on the above background, the existing technology still faces major challenges in multi-bolt torque synchronous tightening, especially in improving operational efficiency, ensuring uniform tightening torque, reducing human error, and simplifying equipment structure. Therefore, there is an urgent need for a new technical solution to meet the demand for efficient, safe, and reliable multi-point torque transmission in complex working scenarios.

### Summary of the Invention

The purpose of the present invention is to propose a multi-axis tightening device that aims to provide a more efficient, precise, and easy-to-operate synchronous tightening solution for multiple bolts. The device can automatically distribute torque during the tightening process of multiple bolts, solving the problem in the existing technology where individual bolts cannot be rotated into position simultaneously. This greatly improves tightening efficiency and precision while reducing human error. The device has the advantages of a simple structure, easy operation, and strong scalability. It is suitable for a wide range of industrial applications, especially in pipeline installation, mechanical assembly, and other situations requiring high-precision tightening.

To achieve the above purpose, the technical solution of the present invention is: A multi-axis tightening device, comprising a device input shaft 10 and a plurality of tightening heads 11. The device is provided with a plurality of transmission units 20. Each transmission unit is provided with a first unit output shaft 21, a second unit output shaft 22, and a unit input shaft 23. The unit input shaft 23 drives the first unit output shaft 21 and the second unit output shaft 22 to rotate. When the rotation of the first unit output shaft 21 is obstructed, the unit input shaft 23 drives the second unit output shaft 22 to rotate. When the rotation of the second unit output shaft 22 is obstructed, the unit input shaft 23 drives the first unit output shaft 21 to rotate. The first unit output shaft 21 of the transmission unit drives the unit input shaft 23 of another transmission unit or drives the tightening head 11. The second unit output shaft 22 of the transmission unit drives the input shaft 23 of another transmission unit or drives the tightening head 11. The plurality of transmission units includes a top transmission unit 2A, and the device input shaft 10 drives the unit input shaft 23 of the top transmission unit 2A.

Further, in order to adjust the rotation direction and transmission ratio between the transmission units, the first unit output shaft 21 of the transmission unit drives the unit input shaft 23 of another transmission unit through a transmission gear train 30. The second unit output shaft 22 of the transmission unit drives the input shaft 23 of another transmission unit through the transmission gear train 30. The transmission gear train 30 adjusts the rotation direction and/or transmission ratio of the unit input shaft 23. The transmission gear train 30 includes a transmission output gear 31 arranged on the first unit output shaft 21 and/or the second unit output shaft 22. The transmission gear train 30 further includes a transmission input gear 32 arranged on the unit input shaft 23.

Further, the transmission gear train 30 further includes an intermediate shaft arranged between the transmission output gear 31 and the transmission input gear 32.

Further, one structure of the transmission unit is that the transmission unit 20 is a differential-structure transmission unit. The first unit output shaft 21, the second unit output shaft 22, and the unit input shaft 23 of the transmission unit are respectively connected to one of the left axle gear 41, the right axle gear 42, or the differential housing 43 of the differential structure.

Further, in order to adapt to the structure of the multi-axis tightening device, a preferred differential-structure transmission unit is that the first unit output shaft 21 and the second unit output shaft 22 of the transmission unit are respectively connected to the left axle gear 41 and the right axle gear 42 of the differential structure, and the unit input shaft 23 is connected to the differential housing 43. The first unit output shaft 21 passes through the second unit output shaft 22, and the first unit output shaft and the second unit output shaft exit the differential housing 43 from the same side.

Further, another preferred differential-structure transmission unit is that the unit input shaft 23 of the transmission unit is connected to the right axle gear 42 of the differential structure, the first unit output shaft 21 is connected to the left axle gear 41 of the differential structure, and the second unit output shaft 22 is connected to the differential housing 43 of the differential structure.

Further, another structure of the transmission unit is that the transmission unit 20 is a planetary gear-structure transmission unit. The first unit output shaft 21, the second unit output shaft 22, and the unit input shaft 23 of the transmission unit are respectively connected to one of the planet carrier 51, the ring gear 52, or the sun gear 53 of the planetary gear structure.

Further, a preferred planetary gear-structure transmission unit is that the first unit output shaft 21 of the transmission unit is connected to the planet carrier 51 of the planetary gear structure, the second unit output shaft 22 is connected to the ring gear 52 of the planetary gear structure, and the unit input shaft 23 is connected to the sun gear 53 of the planetary gear structure.

Further, another preferred planetary gear-structure transmission unit is that the first unit output shaft 21 of the transmission unit is connected to the planet carrier 51 of the planetary gear structure, the second unit output shaft 22 is connected to the sun gear 53 of the planetary gear structure, and the unit input shaft 23 is connected to the ring gear 52 of the planetary gear structure.

The beneficial effects of the present invention are: By adopting a plurality of three-shaft-structure transmission units, the three shafts of each transmission unit can be linked for transmission, forming a transmission structure that constitutes a multi-axis torque transmission device with one input shaft and multiple output shafts. The multiple output shafts can simultaneously twist multiple operating objects. A single input rotation operation can output twisting force to multiple operating objects, avoiding missed tightening of bolts, and can adjust the twisting force applied to multiple twisting objects.

The present invention is described in detail below with reference to the accompanying drawings and embodiments.

### Brief Description of the Drawings

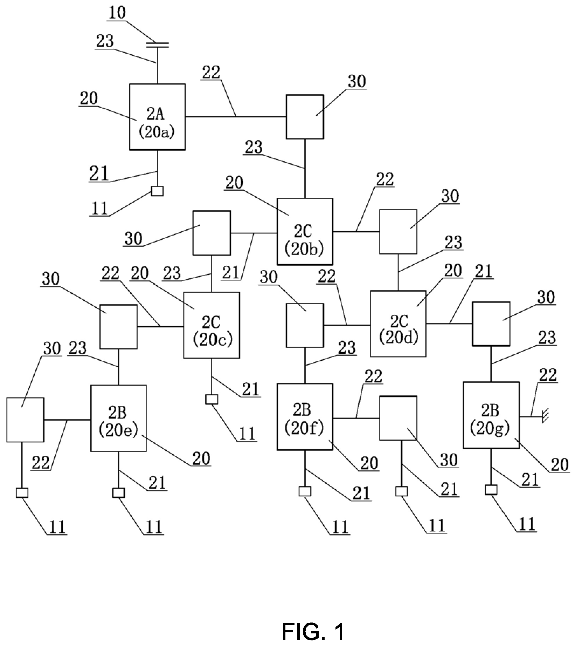

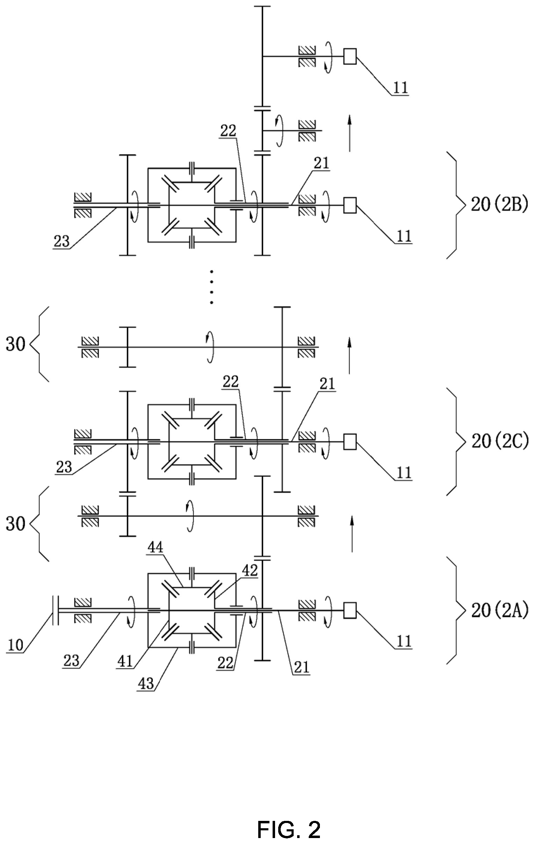

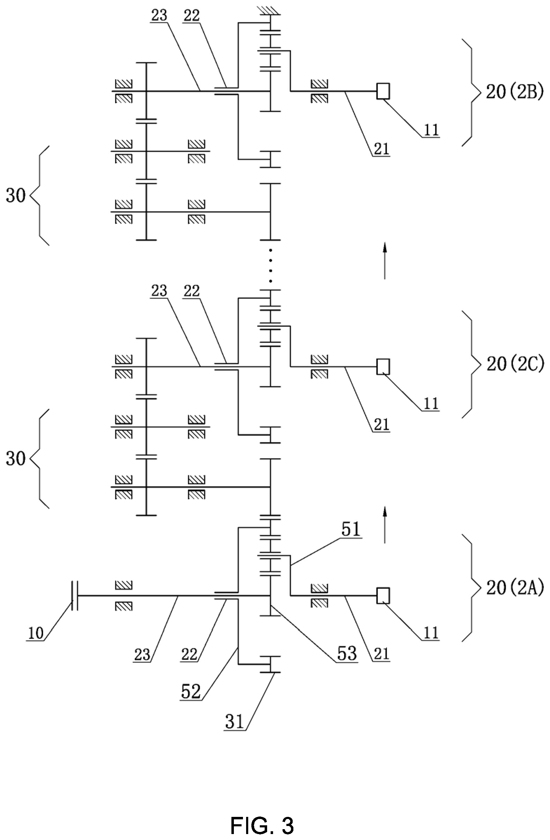

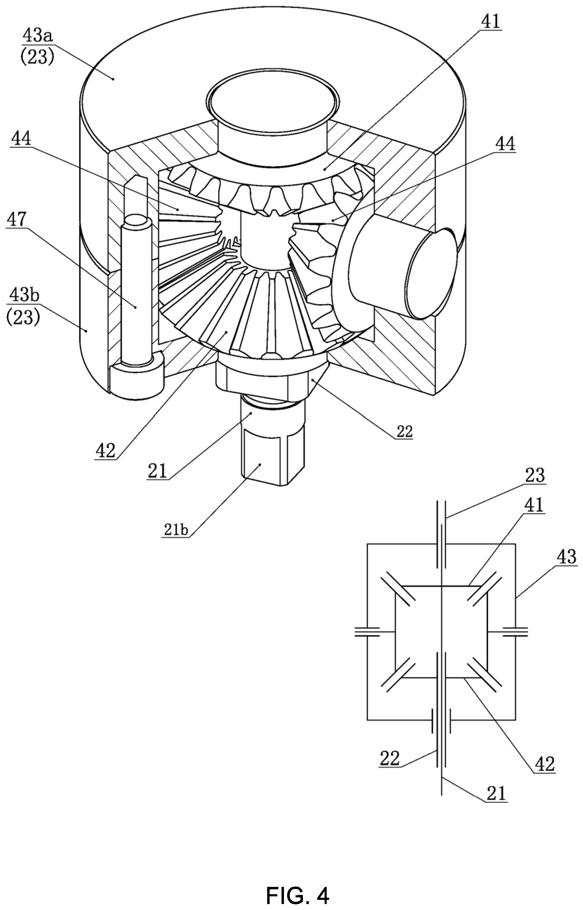

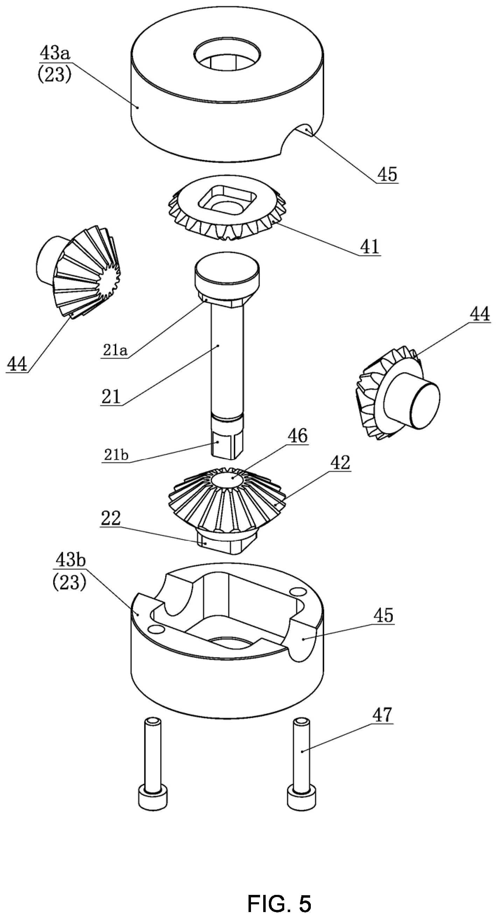

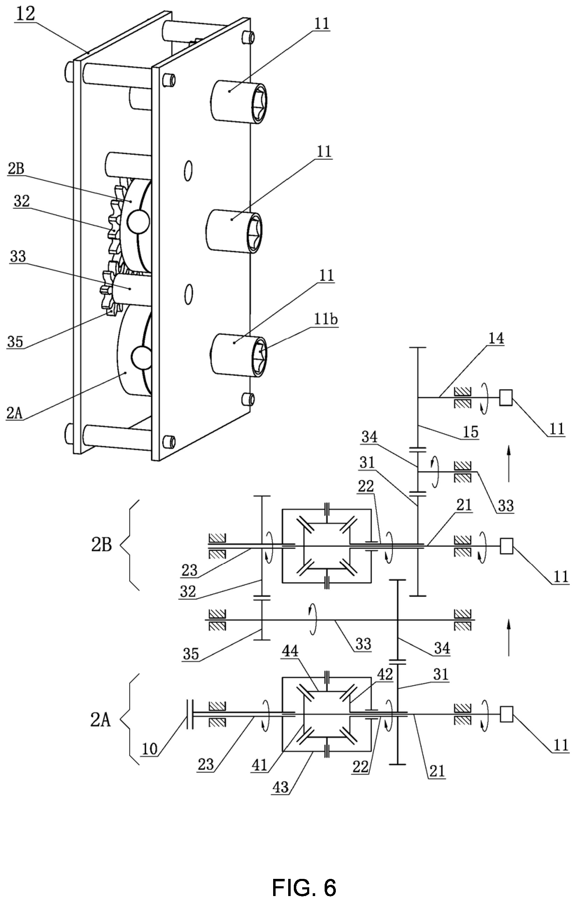

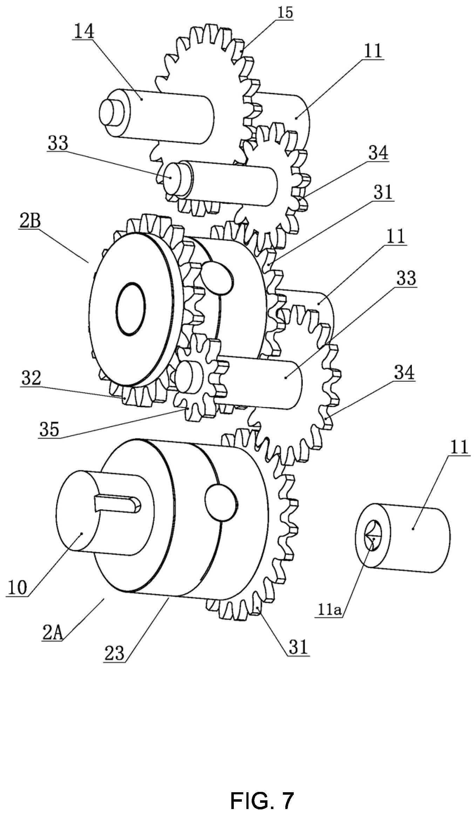

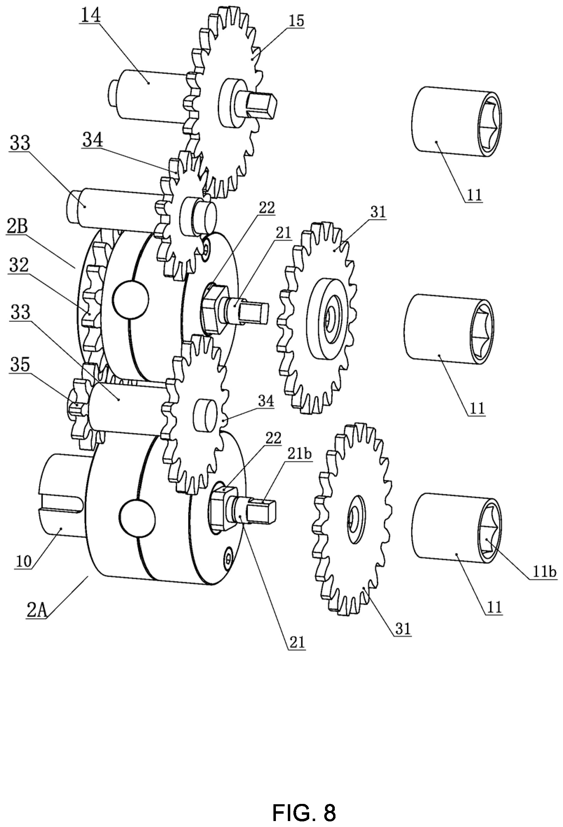

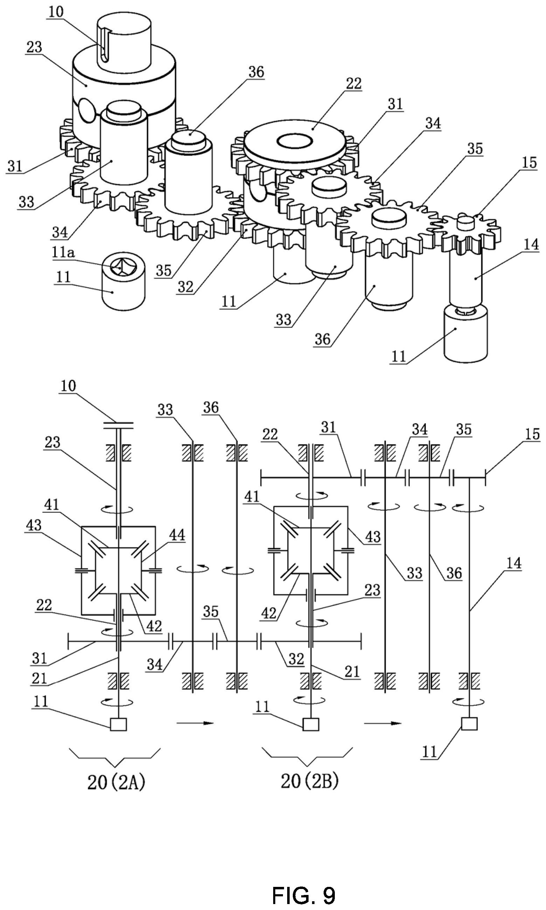

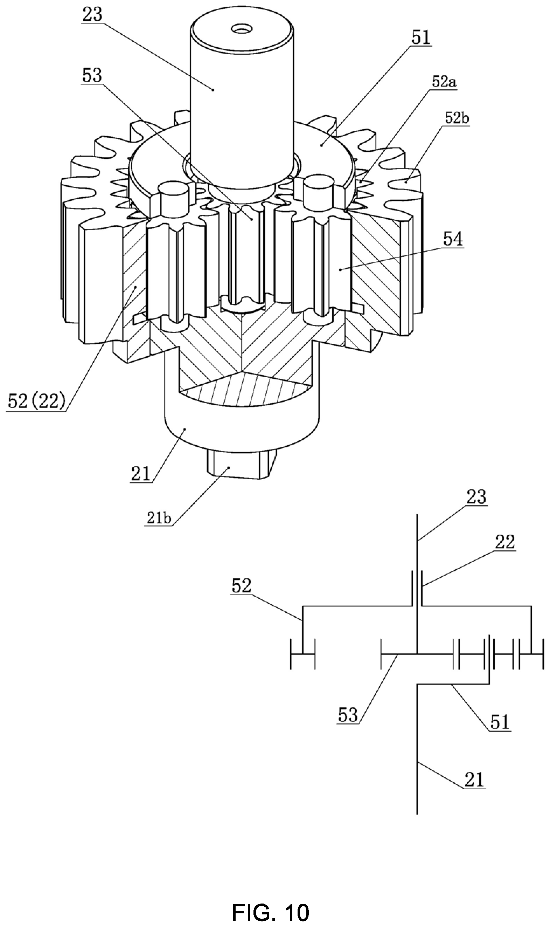

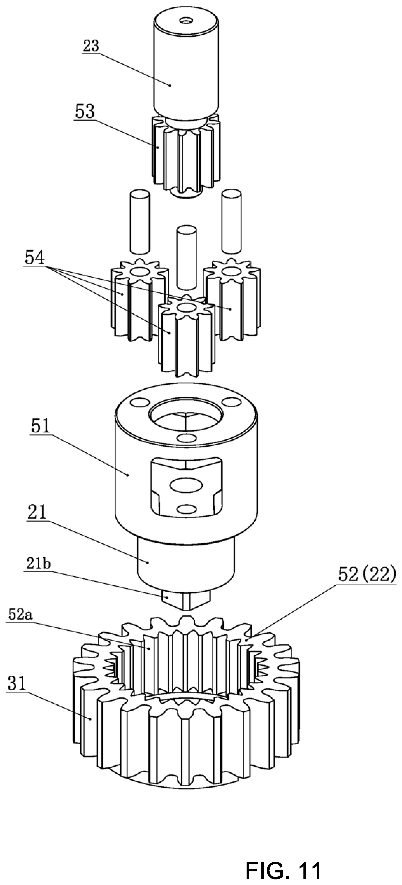

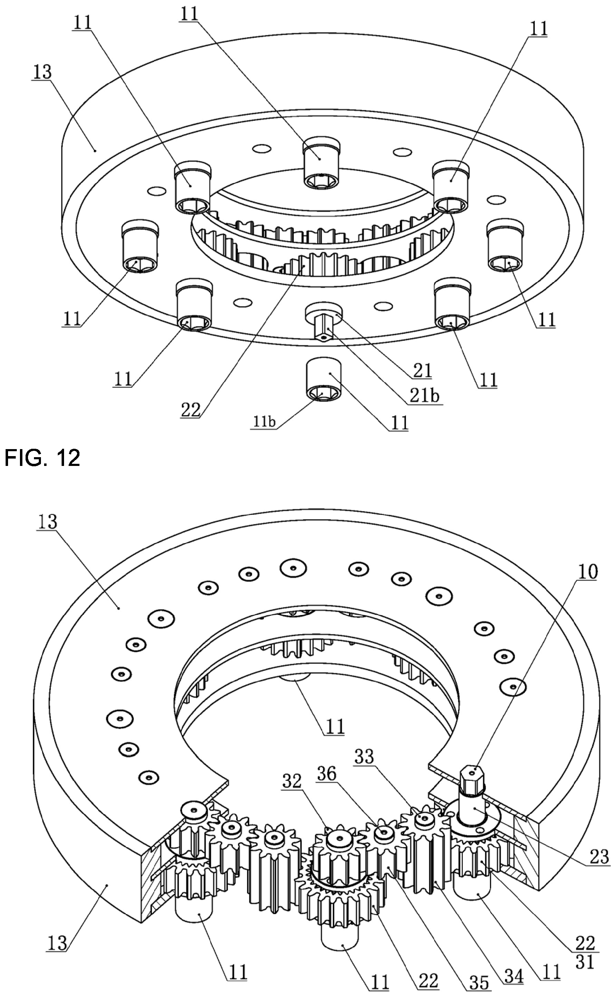

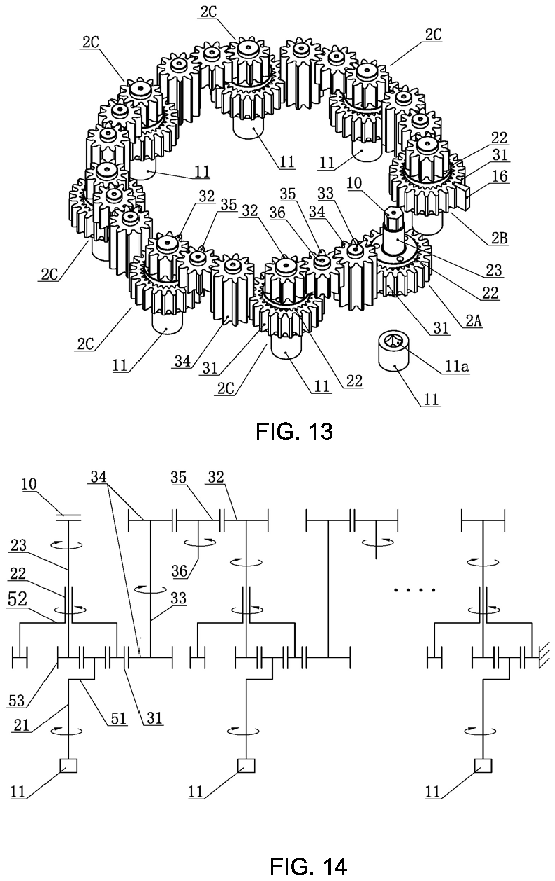

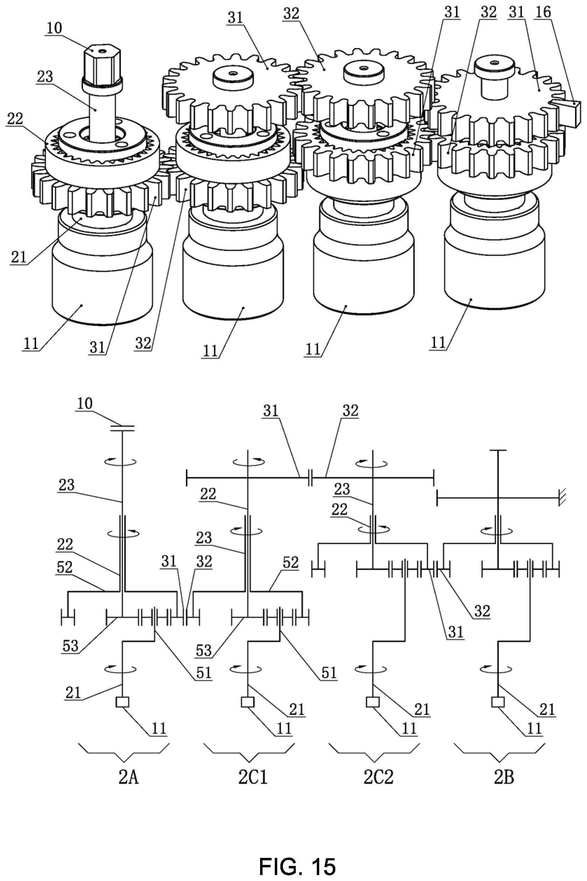

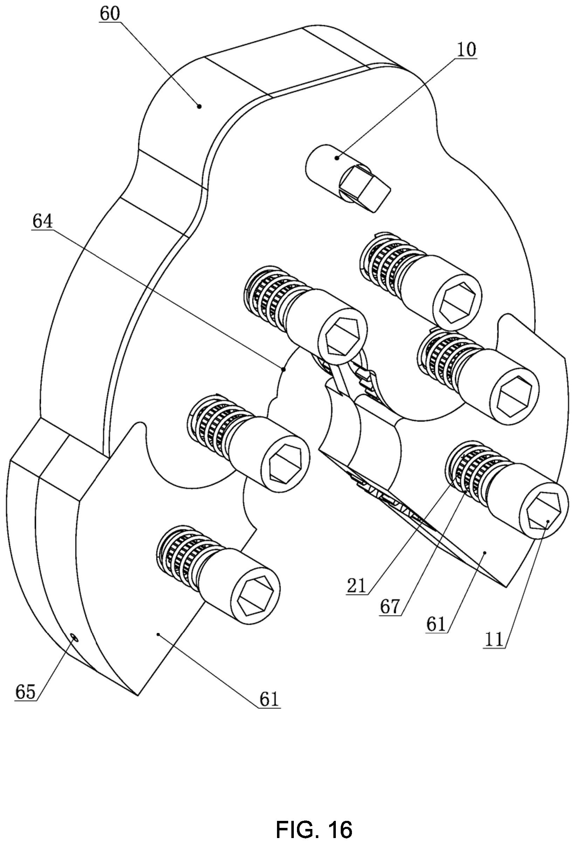

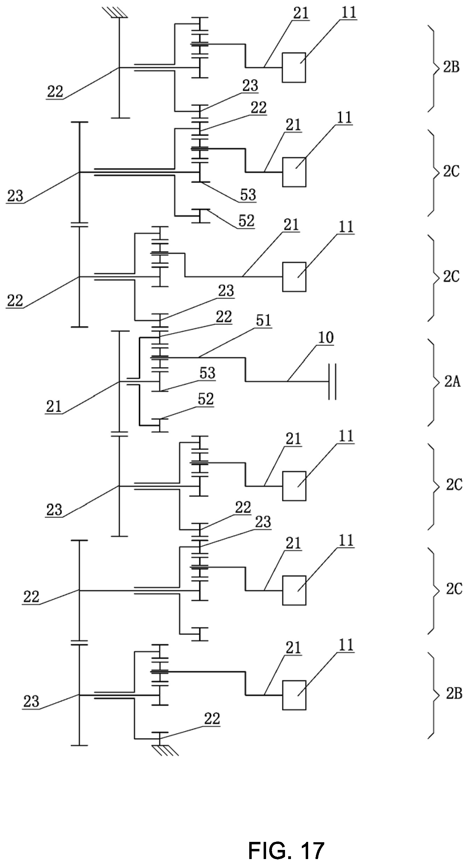

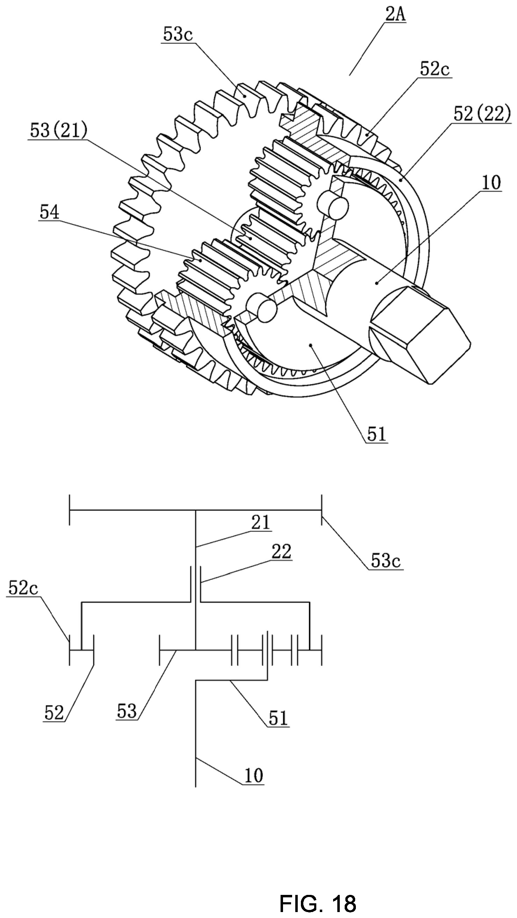

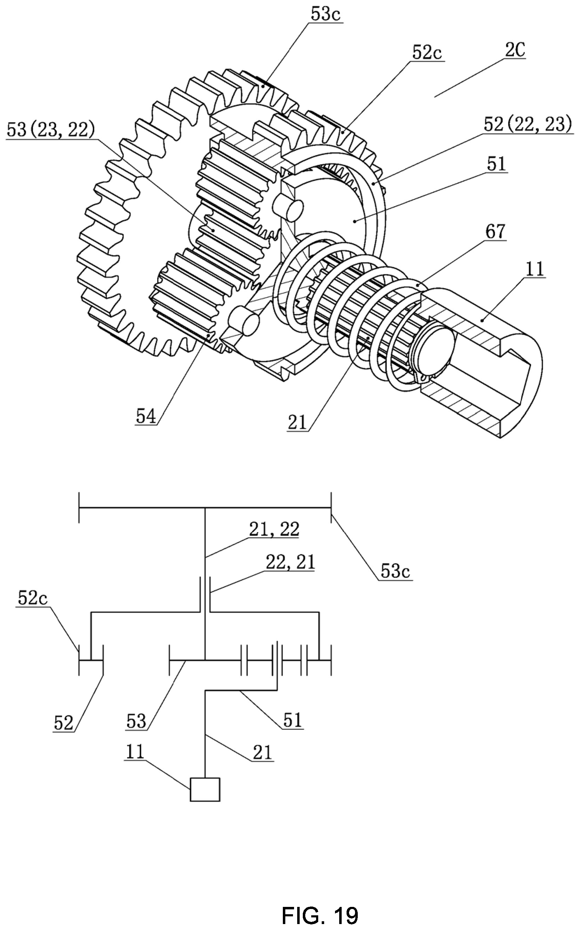

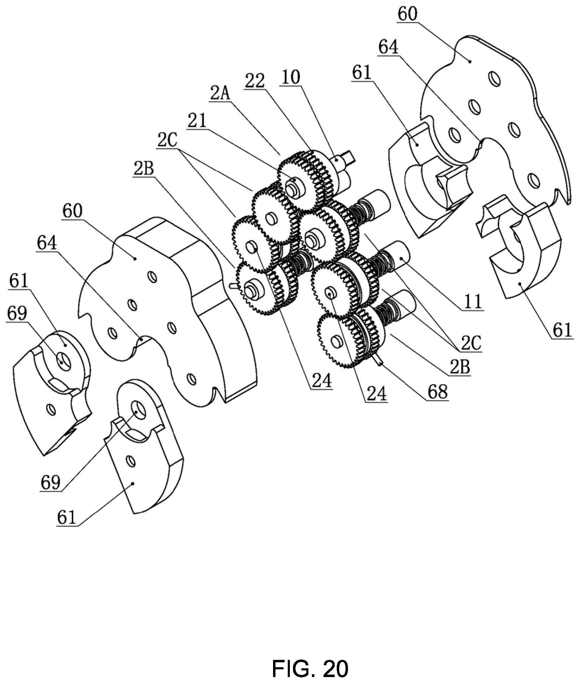

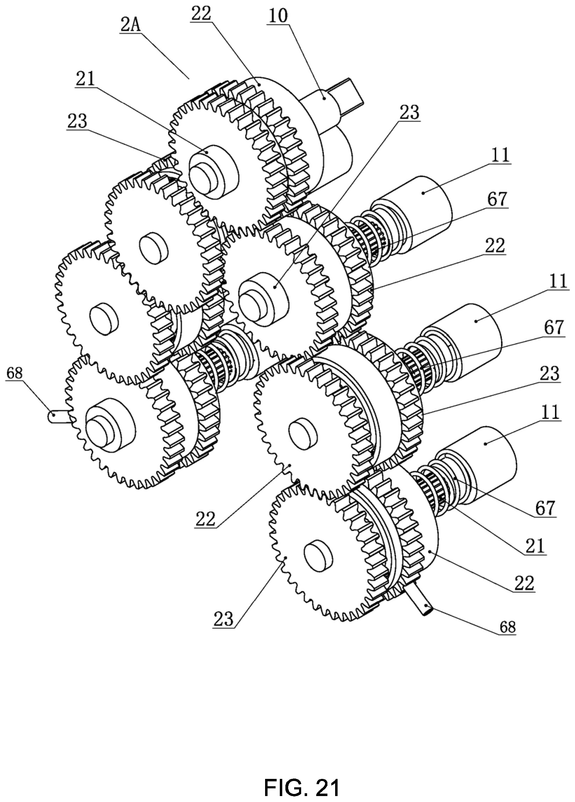

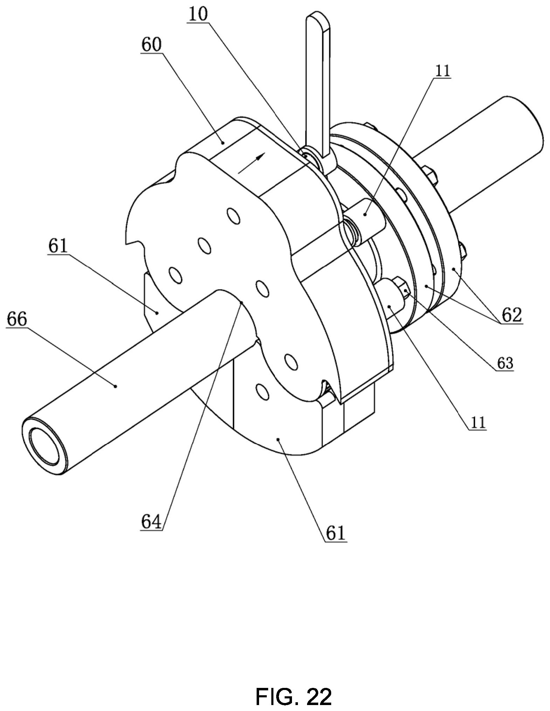

FIG. 1 is a schematic diagram of the transmission of the present invention; FIG. 2 is a schematic diagram of the transmission of a transmission unit of the present invention using a differential structure; FIG. 3 is a schematic diagram of the transmission of a transmission unit of the present invention using a planetary gear structure; FIG. 4 is a structural diagram and transmission schematic diagram of a transmission unit using a differential structure; FIG. 5 is an exploded structural view of a transmission unit using a differential structure; FIG. 6 is a structural diagram and transmission schematic diagram of a multi-axis tightening device using a differential-structure transmission unit, with the transmission gear train using one intermediate shaft; FIG. 7 is an internal structural diagram of a multi-axis tightening device using a differential-structure transmission unit; FIG. 8 is an exploded internal structural view of a multi-axis tightening device using a differential-structure transmission unit; FIG. 9 is a structural diagram and transmission schematic diagram of a multi-axis tightening device using a differential-structure transmission unit, with the transmission gear train using two intermediate shafts; FIG. 10 is a structural diagram and transmission schematic diagram of a transmission unit using a planetary gear structure; FIG. 11 is an exploded structural view of a transmission unit using a planetary gear structure; FIG. 12 is a structural diagram of a multi-axis tightening device using a planetary-gear-structure transmission unit; FIG. 13 is a partial cross-sectional view of a multi-axis tightening device using a planetary-gear-structure transmission unit; FIG. 14 is an internal structural diagram and transmission schematic diagram of a multi-axis tightening device using a planetary-gear-structure transmission unit; FIG. 15 is a structural diagram and transmission schematic diagram of a multi-axis tightening device using a planetary-gear-structure transmission unit, in which the transmission output gear directly drives the transmission input gear; FIG. 16 is a differential open-close tightening tool constructed with the planetary gear structure of the present invention; FIG. 17 is a transmission schematic diagram of the differential open-close tightening tool shown in FIG. 16; FIG. 18 is a structural diagram of the differential input unit in the differential open-close tightening tool; FIG. 19 is a structural diagram of the differential tightening unit in the differential open-close tightening tool; FIG. 20 is an exploded structural diagram of the main frame body, open-close frame, differential input unit, and differential tightening unit in the differential open-close tightening tool; FIG. 21 is a connection structure diagram of the differential input unit and differential tightening unit in the differential open-close tightening tool; FIG. 22 is a schematic diagram of the use of the differential open-close tightening tool.

### Detailed Description of the Embodiments

To achieve efficient and precise synchronous tightening of multiple bolt torques, the present invention proposes a technical solution for a multi-axis tightening device, which includes a device input shaft 10 and a plurality of tightening heads 11. The tightening heads 11 are used to connect bolts or other threaded fasteners that need to be tightened.

As shown in FIG. 1, the multi-axis tightening device is provided with a plurality of transmission units 20. Each transmission unit 20 is a three-shaft transmission structure. The transmission unit has three mutually linked rotating shafts, and each shaft can drive the other two shafts, dynamically transmitting torque. As shown in the connection schematic in FIG. 1, each transmission unit 20 is provided with a first unit output shaft 21, a second unit output shaft 22, and a unit input shaft 23. The unit input shaft 23 drives the first unit output shaft 21 and the second unit output shaft 22 to rotate. When the rotation of the first unit output shaft 21 is obstructed, the unit input shaft 23 drives the second unit output shaft 22 to rotate. When the rotation of the second unit output shaft 22 is obstructed, the unit input shaft 23 drives the first unit output shaft 21 to rotate.

The plurality of transmission units can be divided into three categories: one top transmission unit 2A (such as the driving unit 20a in FIG. 1), at least one end transmission unit 2B (such as the driving units 20e, 20f, and 20g in FIG. 1), and several intermediate transmission units 2C (such as the driving units 20b, 20c, and 20d in FIG. 1). The transmission schematic shown in FIG. 6 illustrates the smallest transmission unit combination structure, which includes only one top transmission unit 2A and one end transmission unit 2B.

The device input shaft 10 is driven by an external driving force. The device input shaft 10 drives the unit input shaft 23 of the top transmission unit 2A. Except for the top transmission unit 2A, the other transmission units 20 are driven by another transmission unit (or the previous-level transmission unit), and their unit input shaft 23 is driven by the first unit output shaft 21 or the second unit output shaft 22 of another transmission unit. For the top transmission unit 2A and the intermediate transmission units 2C, the first unit output shaft 21 of the transmission unit can drive the unit input shaft 23 of another transmission unit (or the next-level transmission unit) or drive a tightening head 11. Similarly, the second unit output shaft 22 of the transmission unit can drive the unit input shaft 23 of another transmission unit or drive a tightening head 11. For the end transmission unit 2B, the first unit output shaft 21 and the second unit output shaft 22 can respectively drive a tightening head 11, or one drives a tightening head 11 while the other is fixed, as shown in the transmission unit 20g in FIG. 1.

In the transmission system shown in FIG. 1, the first unit output shaft 21 and the second unit output shaft 22 of some transmission units are respectively connected to a tightening head 11 and the unit input shaft 23 of the next-level transmission unit (such as transmission units 20a and 20c). The first unit output shaft 21 and the second unit output shaft 22 of some transmission units are respectively connected to the unit input shafts 23 of two next-level transmission units (such as transmission units 20b and 20d). The first unit output shaft 21 and the second unit output shaft 22 of some transmission units are respectively connected to two tightening heads 11 (such as transmission units 20e and 20f). The transmission unit can also be connected to only one tightening head, as in transmission unit 20g, where the first unit output shaft 21 is connected to the tightening head 11 and the second unit output shaft 22 is fixed.

In a broad sense, the transmission unit can have various connection structures. In specific technical solutions, the connection method most suitable for the application conditions can be selected. As typical transmission unit connection structures, as shown in FIG. 2 (an example of a differential-structure transmission unit system) and FIG. 3 (an example of a planetary-gear-structure transmission unit system), the transmission units adopt a chain-type connection structure, including one top transmission unit 2A, one end transmission unit 2B, and several intermediate transmission units 2C. The first unit output shaft 21 or the second unit output shaft 22 of the intermediate transmission unit 2C is respectively connected to one tightening head 11 and the unit input shaft 23 of another transmission unit.

In the process of the upper-level transmission unit driving the lower-level transmission unit, the first unit output shaft 21, the second unit output shaft 22, and the unit input shaft 23 of the transmission unit will have various different rotational speeds and directions. The first unit output shaft 21 and/or the second unit output shaft 22 of the transmission unit drives the unit input shaft 23 of another transmission unit through the transmission gear train 30. The transmission gear train 30 adjusts the rotation direction and/or transmission ratio of the unit input shaft 23, ultimately causing the plurality of tightening heads 11 to rotate in the same direction with equal torque. The transmission gear train 30 includes a transmission output gear 31 arranged on the first unit output shaft 21 and/or the second unit output shaft 22. The transmission gear train 30 further includes a transmission input gear 32 arranged on the unit input shaft 23. Each transmission unit 20 (except the top transmission unit 2A) has a transmission input gear 32 on its unit input shaft 23.

The transmission output gear 31 can directly drive the transmission input gear 32. FIG. 15 includes an example of a transmission gear train 30, in which the transmission output gear 31 of the upper-level transmission unit directly drives the transmission input gear 32 of the lower-level transmission unit.

An intermediate gear can also be arranged between the transmission output gear 31 and the transmission input gear 32. FIGS. 2 and 3 include examples of the transmission gear train 30, in which an intermediate gear is arranged between the transmission output gear 31 and the transmission input gear 32.

The transmission gear train 30 can also realize transmission connections between transmission units at different positions.

The transmission unit 20 can adopt a planetary gear structure or a differential structure. Both the planetary gear structure and the differential structure are three-shaft transmission structures with three mutually linked rotating shafts. Each shaft can drive the other two shafts, dynamically transmitting torque, and is suitable for the transmission unit.

FIG. 2 shows an example of a transmission unit using a differential structure, and FIG. 3 shows an example of a transmission unit using a planetary gear structure. Each transmission unit 20 has a three-shaft structure of a planetary gear or differential. According to the transmission principles of the planetary gear structure and the differential structure, when the rotation of the first unit output shaft 21 is obstructed, the unit input shaft 23 drives the second unit output shaft 22 to rotate. When the rotation of the second unit output shaft 22 is obstructed, the unit input shaft 23 drives the first unit output shaft 21 to rotate.

From a broad perspective, the first unit output shaft 21, the second unit output shaft 22, and the unit input shaft 23 of each transmission unit can be respectively connected to one of the three rotating shafts of the planetary gear structure; or the first unit output shaft 21, the second unit output shaft 22, and the unit input shaft 23 of each transmission unit can be respectively connected to one of the three rotating shafts of the differential structure. For a differential-structure transmission unit, the first unit output shaft 21, the second unit output shaft 22, and the unit input shaft 23 can be respectively connected to one of the left axle gear 41, the right axle gear 42, or the differential housing 43 of the differential structure. That is, the first unit output shaft, the second unit output shaft, and the unit input shaft can optionally be connected to one of the left axle gear, the right axle gear, or the differential housing of the differential structure. Similarly, for a planetary-gear-structure transmission unit, the first unit output shaft 21, the second unit output shaft 22, and the unit input shaft 23 are respectively connected to one of the planet carrier 51, the ring gear 52, or the sun gear 53 of the planetary gear structure. That is, the first unit output shaft, the second unit output shaft, and the unit input shaft can optionally be connected to one of the planet carrier, the ring gear, or the sun gear of the planetary gear structure.

In the multi-axis tightening device of the present invention, when the device input shaft 10 rotates, torque is transmitted to each tightening head 11. The tightening head with the smallest twisting resistance will be driven to rotate first, i.e., the loosest bolt among the multiple bolts can be tightened first. Then the multiple tightening heads are tightened one by one in sequence, so that the multiple bolts are locked in a state of the same or similar torque, and no untightened bolts will be missed.
**Embodiment 1:** As shown in FIGS. 4 and 5, a differential-structure transmission unit. In this embodiment, the first unit output shaft 21 of the transmission unit is connected to the left axle gear 41 of the differential structure, the second unit output shaft 22 is connected to the right axle gear 42 of the differential structure, and the unit input shaft 23 is connected to the differential housing 43. The differential housing includes a first differential housing 43a and a second differential housing 43b that are butted together. The first differential housing 43a and the second differential housing 43b are assembled and fixed by bolts 47. The first differential housing 43a and the second differential housing 43b are respectively provided with two semicircular holes 45 on the butting surfaces, forming circular holes for installing the differential planet gears 44. Two differential planet gears 44 are symmetrically installed between the first differential housing 43a and the second differential housing 43b. The second unit output shaft 22 passes out from one side of the second differential housing 43b. The second unit output shaft 22 and the right axle gear 42 are provided with shaft holes 46 that rotationally fit with the first unit output shaft 21. The first unit output shaft 21 passes through the second unit output shaft 22 and also passes out from one side of the second differential housing 43b.

One end of the first unit output shaft 21 is rotationally connected to the first differential housing 43a. The first unit output shaft 21 is connected to the left axle gear 41 through a quadrangular frustum 21a, so that the first unit output shaft 21 rotates synchronously with the left axle gear 41. The output end of the first unit output shaft 21 is provided with a quadrangular prism 21b for connecting the tightening head 11 or driving the next-level transmission unit to rotate.

The second unit output shaft 22 and the right axle gear 42 are made as one part, respectively providing the functions of the second unit output shaft 22 and the right axle gear 42. Here, the term "connection" in this embodiment is a broad concept. Similarly, the differential housing 43 structurally serves as the unit input shaft 23.

In the differential-structure transmission unit of this embodiment, when the unit input shaft 23 (differential housing 43) rotates, torque is transmitted to the first unit output shaft 21 and the second unit output shaft 22, driving the object with smaller twisting resistance to rotate.

According to the transmission characteristics of the differential structure, the sum of the rotational speeds of the left axle gear and the right axle gear is twice the rotational speed of the differential housing. In the differential-structure transmission unit of this embodiment, when the first unit output shaft 21 is obstructed and stops rotating, the unit input shaft 23 drives the second unit output shaft 22 to rotate at twice the speed. Similarly, when the second unit output shaft 22 is obstructed and stops rotating, the unit input shaft 23 drives the first unit output shaft 21 to rotate at twice the speed.

As a specific solution, the differential-structure transmission unit of this embodiment provides an example in which the differential housing is connected to the unit input shaft 23.

It is not limited to this. The first unit output shaft 21, the second unit output shaft 22, and the unit input shaft 23 can be respectively connected to one of the left axle gear 41, the right axle gear 42, or the differential housing 43 of the differential structure: When the unit input shaft 23 is connected to the left axle gear 41 of the differential structure, the first unit output shaft 21 can be connected to the right axle gear 42 of the differential structure and the second unit output shaft 22 connected to the differential housing 43; or the first unit output shaft 21 can be connected to the differential housing 43 and the second unit output shaft 22 connected to the right axle gear 42 of the differential structure. When the unit input shaft 23 is connected to the right axle gear 42 of the differential structure, the first unit output shaft 21 can be connected to the left axle gear 41 of the differential structure and the second unit output shaft 22 connected to the differential housing 43; or the first unit output shaft 21 can be connected to the differential housing 43 and the second unit output shaft 22 connected to the left axle gear 41 of the differential structure. When the unit input shaft 23 is connected to the differential housing 43 of the differential structure, the first unit output shaft 21 can be connected to the right axle gear 42 of the differential structure and the second unit output shaft 22 connected to the left axle gear 41; or the first unit output shaft 21 can be connected to the left axle gear 41 and the second unit output shaft 22 connected to the right axle gear 42 of the differential structure.
**Embodiment 2:** A differential-structure transmission unit. This embodiment is a variant of the transmission unit of Embodiment 1. This embodiment has the same differential structure as Embodiment 1. In this embodiment, as shown in the transmission unit 2B in FIG. 9, the first unit output shaft 21, the second unit output shaft 22, and the unit input shaft 23 of the transmission unit are connected to the differential structure in a different manner. The first unit output shaft 21 of the transmission unit is connected to the left axle gear 41 of the differential structure, the second unit output shaft 22 is connected to the differential housing 43 of the differential structure, and the unit input shaft 23 is connected to the right axle gear 42.

According to the transmission characteristics of the differential structure, the sum of the rotational speeds of the left axle gear and the right axle gear is twice the rotational speed of the differential housing. In the differential-structure transmission unit of this embodiment, when the first unit output shaft 21 is obstructed and stops rotating, the unit input shaft 23 drives the second unit output shaft 22 to rotate at 0.5 times the speed in the same direction. When the second unit output shaft 22 is obstructed and stops rotating, the unit input shaft 23 drives the first unit output shaft 21 to rotate at the same speed in the opposite direction.

The difference between this embodiment and Embodiment 1 illustrates that, for a differential-structure transmission unit, the first unit output shaft 21, the second unit output shaft 22, and the unit input shaft 23 of each transmission unit can be respectively connected to one of the three rotating shafts of the differential structure.
**Embodiment 3:** As shown in FIGS. 6 to 8, a multi-axis tightening device is provided with a plurality of differential-structure transmission units 20 as described in Embodiment 1.

This embodiment is provided with two transmission units 20, one of which is the top transmission unit 2A and the other is the end transmission unit 2B. The two transmission units are installed on the frame body 12 of the multi-axis tightening device.

The unit input shaft 23 (i.e., the differential housing 43) of the top transmission unit 2A is connected to the device input shaft 10. In practice, the unit input shaft 23 (i.e., the differential housing 43) of the top transmission unit 2A can be made as an integral structure with the device input shaft 10.

The first unit output shaft 21 of the top transmission unit 2A is connected to a tightening head 11. The quadrangular prism 21b at the output end of the first unit output shaft 21 is inserted into the square hole 11a of the tightening head, driving the tightening head 11 to rotate synchronously. The tightening head 11 is provided with a bolt interface 11b. In this embodiment, the bolt interface 11b is a hexagonal socket for tightening hexagonal bolts, hexagonal nuts, and other fasteners.

The second unit output shaft 22 of the top transmission unit 2A drives the unit input shaft 23 of the end transmission unit 2B through the transmission gear train 30. As the transmission gear train, the second unit output shaft 22 of the top transmission unit 2A is provided with a transmission output gear 31, and the unit input shaft 23 of the end transmission unit 2B is provided with a transmission input gear 32. The transmission gear train is also provided with a first intermediate shaft 33. The first intermediate shaft 33 is provided with a first intermediate gear 34 and a second intermediate gear 35. The first intermediate gear 34 meshes with the transmission output gear 31 of the second unit output shaft of the top transmission unit 2A, and the second intermediate gear 35 meshes with the transmission input gear 32 on the unit input shaft 23 of the end transmission unit 2B. In this embodiment, the transmission output gear 31 and the transmission input gear 32 are gears with the same number of teeth. The number of teeth of the first intermediate gear 34 is twice the number of teeth of the second intermediate gear 35, thereby achieving a speed-reducing transmission from the second unit output shaft 22 of the top transmission unit 2A to the unit input shaft 23 of the end transmission unit 2B. The rotational speed of the second unit output shaft 22 of the top transmission unit 2A is twice the rotational speed of the unit input shaft 23 of the end transmission unit.

The device input shaft 10 drives the unit input shaft 23 of the top transmission unit 2A to rotate. According to the characteristics of the differential structure, for the top transmission unit 2A, when the second unit output shaft 22 is obstructed and is in a stopped state, the unit input shaft 23 drives the first unit output shaft 21 to rotate, and the rotational speed of the first unit output shaft 21 is twice the rotational speed of the unit input shaft 23. When the first unit output shaft 21 is obstructed and is in a stopped state, the unit input shaft 23 drives the second unit output shaft 22 to rotate, and the rotational speed of the second unit output shaft 22 is twice the rotational speed of the unit input shaft 23, i.e., the rotational speed of the second unit output shaft 22 is twice the rotational speed of the device input shaft 10. After transmission through the first intermediate gear 34 and the second intermediate gear 35, the unit input shaft 23 of the end transmission unit has the same rotational speed as the device input shaft 10. Thus, the two transmission units have the same rotational speed characteristics and will also have the same or similar torque transmission effects.

In the end transmission unit 2B, the first unit output shaft 21 is directly connected to a tightening head 11. The second unit output shaft 22 drives a tightening shaft 14 through the transmission gear train. The transmission gear train between the second unit output shaft 22 and the tightening shaft 14 includes a transmission output gear 31 arranged on the second unit output shaft 22, a tightening input gear 15 arranged on the tightening shaft 14, and the first intermediate shaft 33. The first intermediate shaft 33 is provided with a first intermediate gear 34. The first intermediate gear 34 meshes with the transmission output gear 31 and the tightening input gear 15 respectively. Through one-stage intermediate gear transmission, the tightening input gear 15 and the transmission output gear 31 rotate in the same direction. The number of teeth of the transmission output gear 31 is the same as the number of teeth of the tightening input gear 15, so that the rotational speed of the second unit output shaft 22 is the same as that of the tightening shaft 14. Finally, the rotational speed and direction of the tightening head 11 on the tightening shaft 14 are the same as those of the tightening head 11 driven by the first unit output shaft 21.

According to the principle of the differential, when the second unit output shaft 22 is obstructed and stops rotating, the unit input shaft 23 drives the first unit output shaft 21 to rotate, and the rotational speed of the first unit output shaft 21 is twice the rotational speed of the unit input shaft 23. When the first unit output shaft 21 is obstructed and stops rotating, the unit input shaft 23 drives the second unit output shaft 22 to rotate, and the rotational speed of the second unit output shaft 22 is twice the rotational speed of the unit input shaft 23. Thus, for the end transmission unit 2B, the first unit output shaft 21 and the second unit output shaft 22 rotate at the same speed, and the output torque is also the same. After adjustment by the transmission gear train 30, the three tightening heads in this embodiment finally have the same rotation direction and rotational speed and the same output torque.

To simplify the structure for ease of understanding, this embodiment only illustrates a multi-axis tightening device including two transmission units and three tightening heads. In practical applications, more transmission units and tightening heads can be provided according to the needs of the tightening objects. The multiple transmission units are driven in a multi-stage structure, as shown in the schematic diagram in FIG. 2.
**Embodiment 4:** As shown in FIG. 9, a multi-axis tightening device. This embodiment is a structural variant of Embodiment 3.

In this embodiment, the top transmission unit 2A adopts the differential-structure transmission unit of Embodiment 1. The end transmission unit 2B adopts the differential-structure transmission unit of Embodiment 2. The unit input shaft 23 of the end transmission unit 2B is connected to the right axle gear 42 of the differential structure, the first unit output shaft 21 is connected to the left axle gear 41 of the differential structure, and the second unit output shaft 22 is connected to the differential housing 43 of the differential structure.

As in Embodiment 1, the unit input shaft 23 (i.e., the differential housing 43) of the top transmission unit 2A is connected to the device input shaft 10. The first unit output shaft 21 of the top transmission unit 2A is connected to a tightening head 11. The second unit output shaft 22 of the top transmission unit 2A drives the unit input shaft 23 of the end transmission unit 2B through the transmission gear train.

Due to the structural change of the end transmission unit 2B, as the transmission gear train, the second unit output shaft 22 of the top transmission unit 2A is provided with a transmission output gear 31, and the unit input shaft 23 of the end transmission unit 2B is provided with a transmission input gear 32. The transmission gear train is also provided with a first intermediate shaft 33 and a second intermediate shaft 36. The first intermediate shaft 33 is provided with a first intermediate gear 34. The first intermediate gear 34 meshes with the transmission output gear 31, and the second intermediate gear 35 on the second intermediate shaft 36 meshes with the transmission input gear 32. In this embodiment, the transmission output gear 31 and the transmission input gear 32 are gears with the same number of teeth. The number of teeth of the first intermediate gear 34 is the same as the number of teeth of the second intermediate gear 35, thereby achieving same-speed reverse transmission from the second unit output shaft 22 of the top transmission unit 2A to the unit input shaft 23 of the end transmission unit 2B. For the end transmission unit 2B, the unit input shaft 23 is connected to the right axle gear 42 of the differential structure. When the differential housing 43 is stationary, the left axle gear 41 and the right axle gear 42 rotate in opposite directions. Therefore, when the second unit output shaft 22 is obstructed and does not rotate, the first unit output shaft 21 drives the tightening head 11 to rotate in the opposite direction relative to the unit input shaft 23, achieving same-direction and same-speed rotation with the tightening head 11 driven by the top transmission unit 2A.

In the end transmission unit 2B, the second unit output shaft 22 drives a tightening head 11. The second unit output shaft 22 drives a tightening shaft 14 through the transmission gear train. The transmission gear train between the second unit output shaft 22 and the tightening shaft 14 includes a transmission output gear 31 arranged on the second unit output shaft 22, a tightening input gear 15 arranged on the tightening shaft 14, the first intermediate shaft 33, and the second intermediate shaft 36. The first intermediate shaft 33 is provided with a first intermediate gear 34, and the second intermediate shaft 36 is provided with a second intermediate gear 35. The first intermediate gear 34 meshes with the second intermediate gear 35. The first intermediate gear 34 meshes with the transmission output gear 31, and the second intermediate gear 35 meshes with the tightening input gear 15. Through two-stage intermediate gear transmission, the tightening input gear 15 and the transmission output gear 31 rotate in opposite directions. The number of teeth of the transmission output gear 31 is twice the number of teeth of the tightening input gear 15, so that the rotational speed of the second unit output shaft 22 is twice the rotational speed of the tightening shaft 14. Finally, the rotational speed and direction of the tightening head 11 on the tightening shaft 14 are the same as those of the tightening head 11 driven by the first unit output shaft 21.

The difference between this embodiment and Embodiment 3 illustrates that different differential-structure transmission units can be used to form a multi-axis tightening device.
**Embodiment 5:** As shown in FIGS. 10 and 11, a planetary-gear-structure transmission unit. In this embodiment, the first unit output shaft 21 of the transmission unit is connected to the planet carrier 51 of the planetary gear structure, the second unit output shaft 22 is connected to the ring gear 52 of the planetary gear structure, and the unit input shaft 23 is connected to the sun gear 53 of the planetary gear structure. The ring gear 52 is provided with an internal ring gear 52a. The planetary gear structure of this embodiment is provided with three planet gears 54. The planet gears 54 are installed on the planet carrier 51 and mesh with the sun gear 53 and the internal ring gear 52a of the ring gear respectively. The term "connection" in this embodiment is a broad concept. The first unit output shaft 21 and the planet carrier 51 are made as one part (as shown in FIG. 11). The second unit output shaft 22 and the ring gear 52 are one part, and its external gear 52b serves as the output transmission structure of the second unit output shaft 22. The unit input shaft 23 and the sun gear 53 are made as one structure.

The output end of the first unit output shaft 21 is provided with a quadrangular prism 21b for connecting the tightening head 11 or for driving the next-level transmission unit.

In the planetary-gear-structure transmission unit of this embodiment, when the unit input shaft 23 (sun gear 53 of the planetary gear) rotates, torque is transmitted to the first unit output shaft 21 and the second unit output shaft 22, driving the object with smaller twisting resistance to rotate.

According to the planetary gear transmission calculation formula: ω₁ + αω₂ = (1 + αω₃, where ω₁ is the rotational speed of the sun gear 53, ω₂ is the rotational speed of the internal ring gear 52a, ω₃ is the rotational speed of the planet carrier 51, and α is the gear ratio of the internal ring gear 52a to the sun gear 53.

The number of teeth of the internal ring gear is greater than that of the sun gear. When the planet carrier is obstructed and stops rotating, the rotational speed of the sun gear is greater than that of the internal ring gear. When the planet carrier 51 is obstructed and stops rotating, the speed ratio of the sun gear 53 to the internal ring gear 52a (i.e., the ring gear 52) (ω₁:ω₂) is α:1. When the internal ring gear 52a is obstructed and stops rotating, the transmission ratio of the sun gear 53 to the planet carrier 51 (ω₁:ω₃) is (α+1):1. Combined with the planetary-gear-structure transmission unit of this embodiment, the transmission ratio of the unit input shaft 23 to the second unit output shaft 22 is 2.5:1, and the transmission ratio of the unit input shaft 23 to the first unit output shaft 21 is 3.5:1.

It is not limited to this. The first unit output shaft 21, the second unit output shaft 22, and the unit input shaft 23 can be respectively connected to one of the planet carrier 51, the ring gear 52, or the sun gear 53 of the planetary gear structure: When the unit input shaft 23 is connected to the sun gear 53 of the planetary gear structure, the first unit output shaft 21 can be connected to the planet carrier 51 of the planetary gear structure and the second unit output shaft 22 connected to the ring gear 52 of the planetary gear structure; or the first unit output shaft 21 can be connected to the ring gear 52 of the planetary gear structure and the second unit output shaft 22 connected to the planet carrier 51 of the planetary gear structure. When the unit input shaft 23 is connected to the planet carrier 51 of the planetary gear structure, the first unit output shaft 21 can be connected to the sun gear 53 of the planetary gear structure and the second unit output shaft 22 connected to the ring gear 52 of the planetary gear structure; or the first unit output shaft 21 can be connected to the ring gear 52 of the planetary gear structure and the second unit output shaft 22 connected to the sun gear 53 of the planetary gear structure. When the unit input shaft 23 is connected to the ring gear 52 of the planetary gear structure, the first unit output shaft 21 can be connected to the sun gear 53 of the planetary gear structure and the second unit output shaft 22 connected to the planet carrier 51 of the planetary gear structure; or the first unit output shaft 21 can be connected to the planet carrier 51 of the planetary gear structure and the second unit output shaft 22 connected to the sun gear 53 of the planetary gear structure.
**Embodiment 6:** As shown in FIGS. 12 to 14, the transmission schematic is shown in FIG. 3. A multi-axis tightening device is provided with eight planetary-gear-structure transmission units 20 as described in Embodiment 5. The eight transmission units are installed on the frame body 13 of the multi-axis tightening device. The frame body 13 is a three-layer annular structure. The first unit output shaft 21 (i.e., the planet carrier 51 of the planetary gear) of each transmission unit is connected to a tightening head 11.

The eight transmission units adopt a chain-type connection structure, including one top transmission unit 2A, one end transmission unit 2B, and six intermediate transmission units 2C. The unit input shaft 23 (i.e., the sun gear 53 of the planetary gear structure) of the top transmission unit 2A is provided with the device input shaft 10. In this embodiment, the unit input shaft 23 of the top transmission unit 2A can be made as an integral structure with the device input shaft 10.

The first unit output shaft 21 of each of the eight transmission units is respectively connected to a tightening head 11.

For the top transmission unit 2A and the intermediate transmission units 2C, the second unit output shaft 22 is connected to the unit input shaft 23 of another transmission unit 20 through the transmission gear train 30, and the eight transmission units form a transmission chain structure. The second unit output shaft 22 of the end transmission unit 2B is fixed. In this embodiment, the frame body 13 is provided with a wedge block 16 that prevents the ring gear 52 of the end transmission unit 2B from rotating, thereby fixing the second unit output shaft 22 of the end transmission unit 2B.

As the transmission gear train, the second unit output shaft 22 (i.e., the ring gear 52 of the planetary gear) is provided with a transmission output gear 31, and the unit input shaft 23 is provided with a transmission input gear 32. The transmission gear train is also provided with a first intermediate shaft 33 and a second intermediate shaft 36. The first intermediate shaft 33 is provided with a first intermediate gear 34, and the second intermediate shaft 36 is provided with a second intermediate gear 35. The first intermediate gear 34 and the second intermediate gear 35 mesh with each other. The first intermediate gear 34 meshes with the transmission output gear 31, and the second intermediate gear 35 meshes with the transmission input gear 32.

The device input shaft 10 drives the rotation of each transmission unit. When the second unit output shaft 22 of a transmission unit is obstructed and is in a stopped state, the unit input shaft 23 drives the first unit output shaft 21 to rotate. When the first unit output shaft 21 is obstructed and is in a stopped state, the unit input shaft 23 drives the second unit output shaft 22 to rotate and transmits the torque to the next-level transmission unit.

This embodiment uses 8 transmission unit structures, which has a long transmission chain. In actual working conditions, considering mechanical efficiency losses, the gear ratio of the transmission output gear 31 to the transmission input gear 32 should be adjusted according to the mechanical efficiency η, so that the rotational speed of the unit input shaft of the transmission units on the transmission chain decreases successively, compensating for the torque of the transmission units lost due to mechanical efficiency, thereby making the torque of the first unit output shaft 21 of each transmission unit tend to be balanced. The output torque of each tightening head 11 connected to the first unit output shaft 21 also tends to be balanced.

This embodiment illustrates a multi-axis tightening device provided with eight transmission units and eight tightening heads. In practical applications, different numbers of transmission units and tightening heads can be provided according to the needs of the tightening objects. The multiple transmission units are driven in a multi-stage structure, as shown in the schematic diagram in FIG. 3. The transmission units and tightening heads can also adopt different arrangements, such as linear arrangement or semicircular arrangement.
**Embodiment 7:** As shown in FIG. 15, a multi-axis tightening device. This embodiment is a structural variant of Embodiment 6.

This embodiment illustrates four planetary-gear-structure transmission units 20. The transmission sequence of the four transmission units is the top transmission unit 2A, the first intermediate transmission unit 2C1, the second intermediate transmission unit 2C2, and the end transmission unit 2B. The top transmission unit 2A and the second intermediate transmission unit 2C2 are the planetary-gear-structure transmission units described in Embodiment 5.

The structures of the first intermediate transmission unit 2C1 and the end transmission unit 2B are: the first unit output shaft 21 of the transmission unit is connected to the planet carrier 51 of the planetary gear structure, the second unit output shaft 22 of the transmission unit is connected to the sun gear 53 of the planetary gear structure, and the unit input shaft 23 is connected to the ring gear 52 of the planetary gear structure.

The first unit output shaft 21 of each of the four transmission units is connected to a torque head 11.

As the transmission gear train, the second unit output shaft 22 of the top transmission unit 2A, the first intermediate transmission unit 2C1, and the second intermediate transmission unit 2C2 is each connected to a transmission output gear 31. The unit input shaft of the first intermediate transmission unit 2C1, the second intermediate transmission unit 2C2, and the end transmission unit 2B is each connected to a transmission input gear 32. The number of teeth of each transmission output gear 31 is the same as that of each transmission input gear. To avoid mechanical structural interference, transmission output gears without meshing relationships are axially offset.

The transmission output gear 31 of the top transmission unit 2A directly meshes with the transmission input gear 32 of the first intermediate transmission unit 2C1. The transmission output gear 31 of the first intermediate transmission unit 2C1 directly meshes with the transmission input gear 32 of the second intermediate transmission unit 2C2. The transmission output gear 31 of the second intermediate transmission unit 2C2 directly meshes with the transmission input gear 32 of the end transmission unit 2B. The transmission output gear 31 of the end transmission unit 2B is fixed by a wedge block 16.

In the top transmission unit 2A, when the second unit output shaft 22 (ring gear of the planetary gear) is stationary, the first unit output shaft 21 (planet carrier of the planetary gear) rotates in the same direction as the unit input shaft 23 (sun gear of the planetary gear). When the first unit output shaft 21 is stationary, the second unit output shaft 22 rotates in the opposite direction to the unit input shaft 23.

Since the top transmission unit 2A and the first intermediate transmission unit 2C1 are both driven by the ring gear 52 with the same structure, the ring gears of the top transmission unit 2A and the first intermediate transmission unit 2C1 rotate at the same speed in opposite directions. In the first intermediate transmission unit 2C1, when the second unit output shaft 22 (sun gear of the planetary gear) is stationary, the first unit output shaft 21 (planet carrier of the planetary gear) rotates in the same direction as the unit input shaft 23 (ring gear of the planetary gear). Therefore, the first unit output shafts 21 of the top transmission unit 2A and the first intermediate transmission unit 2C1 rotate at the same speed in the same direction, and the locking heads 11 driven by them also rotate at the same speed in the same direction. By analogy, as shown in FIG. 15, the four tightening heads 11 rotate at the same speed in the same direction, and their output torques are also the same or similar.

The multi-axis tightening device of this embodiment has a more compact structure and is particularly suitable for tightening multiple bolts with small spacing.

The difference between this embodiment and Embodiment 6 illustrates that different planetary-gear-structure transmission units can be used to form a multi-axis tightening device.
**Embodiment 8:** As shown in FIGS. 16 to 22, a multi-axis tightening device. This embodiment is an open-close tightening tool for tightening pipeline flange bolts, including a main frame body 60 and open-close frames 61. The pipeline flange 62 corresponding to this embodiment is provided with six fastening bolts 63.

The main frame body 60 is provided with a central arc 64 adapted to the pipeline. Two open-close frames 61 are symmetrically arranged on the main frame body. The open-close frames 61 rotate to open or close on the main frame body 60. When the two open-close frames 61 are opened, they can straddle the pipeline 66, and the central arc 64 of the main frame body is placed on the pipeline (as shown in FIG. 22). When the two open-close frames 61 are closed, the main frame body 60 and the open-close frames 61 are nested around the pipeline (as shown in FIG. 22).

The open-close tightening tool of this embodiment is provided with one top transmission unit 2A, two end transmission units 2B, and four intermediate transmission units 2C.

In order to install the top transmission unit 2A, the end transmission units 2B, and the intermediate transmission units 2C, both the main frame body and the open-close frames adopt a combined structure of two plates.

The main frame body 60 is provided with the top transmission unit 2A. The two open-close frames 61 are symmetrically arranged on the main frame body on both sides of the top transmission unit 2A. In this embodiment, the main frame body 60 is provided with four intermediate transmission units 2C inside. The four intermediate transmission units 2C are symmetrically arranged on both sides of the top transmission unit 2A, with two intermediate transmission units 2C on each side. Each of the two open-close frames 61 is provided with one end transmission unit 2B inside. When the two open-close frames 61 are closed, the two end transmission units 2B and the four intermediate transmission units 2C are arranged around the pipeline corresponding to the six fastening bolts 63.

The top transmission unit 2A, the end transmission units 2B, and the intermediate transmission units 2C are all planetary-gear-structure transmission units. The planetary gear structure includes a planet carrier 51, a ring gear 52, a sun gear 53, and planet gears 54.

The end transmission units 2B and the intermediate transmission units 2C adopt the same planetary gear structure, so that the plurality of end transmission units 2B and intermediate transmission units 2C have the same transmission ratio, including the same transmission ratio between the planet carrier and the ring gear and the same transmission ratio between the ring gear and the sun gear. The top transmission unit 2A also adopts the same planetary gear structure as the end transmission units 2B and the intermediate transmission units 2C. The difference is that the planet carrier 51 of the top transmission unit 2A is connected to the device input shaft 10 (as shown in FIG. 18), and the planet carrier 51 of the end transmission units 2B and the intermediate transmission units 2C is connected to the first unit output shaft 21 on which a tightening head 11 is installed.

In order to realize transmission between the top transmission unit 2A, the end transmission units 2B, and the intermediate transmission units 2C, the sun gear 53 is provided with a sun transmission gear 53c, and the ring gear 52 is provided with a ring gear transmission gear 52c, serving as the transmission mechanism between the transmission units. In this embodiment, the sun transmission gear 53c and the ring gear transmission gear 52c in the top transmission unit 2A, the end transmission units 2B, and the intermediate transmission units 2C are gears with the same number of teeth and the same module.

As shown in FIG. 18, the planet carrier 51 of the top transmission unit 2A is connected to the device input shaft 10. The first unit output shaft 21 of the top transmission unit 2A is connected to the sun gear 53 of the planetary gear mechanism, and the second unit output shaft 22 of the top transmission unit 2A is connected to the ring gear 52 of the planetary gear mechanism. In this embodiment, the sun gear 53 of the top transmission unit 2A is provided with a sun transmission gear 53c as the transmission mechanism of the first unit output shaft. The ring gear 52 of the top transmission unit 2A is provided with a ring gear transmission gear 52c as the transmission mechanism of the second unit output shaft. According to the characteristics of the planetary gear mechanism, when the rotation of the second unit output shaft 22 is obstructed, the device input shaft 10 drives the first unit output shaft 21 to rotate. When the rotation of the first unit output shaft 21 is obstructed, the device input shaft 10 drives the second unit output shaft 22 to rotate.

The end transmission units 2B and the intermediate transmission units 2C are planetary gear transmission units with the same structure. As shown in FIG. 19, taking the intermediate transmission unit 2C as an example, the planet carrier 51 of the intermediate transmission unit 2C is connected to the first unit output shaft 21. The first unit output shaft 21 is connected to a tightening head 11. The first unit output shaft 21 can also be called the "tightening shaft." The unit input shaft 23 of the intermediate transmission unit 2C is connected to the sun gear 53 or the ring gear 52 of the planetary gear mechanism, and the second unit output shaft 22 is connected to the sun gear 53 or the ring gear 52 of the planetary gear mechanism. That is, if the unit input shaft 23 is connected to the sun gear 53 of the planetary gear mechanism, then the second unit output shaft 22 is connected to the ring gear 52 of the planetary gear mechanism. If the unit input shaft 23 is connected to the ring gear 52 of the planetary gear mechanism, then the second unit output shaft 22 is connected to the sun gear 53 of the planetary gear mechanism. In functional terms, the second unit output shaft 22 transmits torque to other transmission units and can also be called the "tightening transmission shaft." The unit input shaft 23 receives torque output from other transmission units and can also be called the "tightening input shaft." According to the characteristics of the planetary gear mechanism, when the rotation of the second unit output shaft 22 is obstructed, the unit input shaft 23 drives the first unit output shaft 21 to rotate. When the rotation of the first unit output shaft 21 is obstructed, the unit input shaft 23 drives the second unit output shaft 22 to rotate.

As shown in FIGS. 17 and 21, the first unit output shaft 21 of the top transmission unit 2A drives the intermediate transmission unit 2C on one side to rotate (as shown in 2A with the lower 2C and 2B in FIG. 17). The first unit output shaft 21 and the two intermediate transmission units 2C and one end transmission unit 2B adopt a chain-type transmission driving method. Similarly, the second unit output shaft 22 of the top transmission unit 2A drives the intermediate transmission unit 2C on the other side to rotate (as shown in 2A with the upper 2C and 2B in FIG. 17). The second unit output shaft 22 and the two intermediate transmission units 2C and one end transmission unit 2B adopt a chain-type transmission driving method.

In order to maintain the same motion transmission relationship, the first unit output shaft 21 of the top transmission unit 2A and the unit input shaft 23 of the intermediate transmission unit 2C it drives are both connected to the sun gear of the planetary gear mechanism, and the second unit output shaft 22 of the top transmission unit 2A and the unit input shaft 23 of the intermediate transmission unit 2C it drives are both connected to the ring gear of the planetary gear mechanism. That is, for mutually transmitting planetary gear mechanisms, one sun gear drives another sun gear, or one ring gear drives another ring gear. Similarly, in the chain-type transmission driving method, the driving relationship between the second unit output shaft 22 and the unit input shaft 23 of the intermediate transmission unit 2C and the end transmission unit 2B is also one sun gear driving another sun gear, or one ring gear driving another ring gear.

As a more specific transmission mechanism, between each transmission unit (top transmission unit 2A, end transmission units 2B, and intermediate transmission units 2C), the ring gear transmission gear 52c meshes with the ring gear transmission gear 52c, and the sun transmission gear 53c meshes with the sun transmission gear 53c, with a transmission ratio of 1:1.

Between the top transmission unit 2A and the intermediate transmission unit 2C, between two intermediate transmission units 2C, and between the intermediate transmission unit 2C and the end transmission unit 2B, the mutually meshing sun transmission gears 53c and ring gear transmission gears 52c are axially offset from each other to avoid interference.

The first unit output shaft 21 and the second unit output shaft 22 of the top transmission unit 2A respectively drive the unit input shaft 23 of a connected intermediate transmission unit 2C at the same transmission ratio.

The first unit output shaft 21 (which can be called the "tightening shaft") of each end transmission unit 2B and intermediate transmission unit 2C drives a tightening head 11 to rotate. The front end of the tightening head 11 is provided with a hexagonal socket that fits with the nut. The tightening shaft is provided with splines. The tightening head 11 is slidingly fitted with the tightening shaft through a spline hole. The tightening shaft is provided with a spring 67 that pushes the tightening head 11, so that the tightening head can elastically extend and retract.

In this embodiment, in the end transmission unit 2B inside the open-close frame 61, the second unit output shaft 22 has no transmission function. In order to ensure the normal operation of the end transmission unit 2B, the second unit output shaft 22 of the end transmission unit 2B is locked by a locking pin 68. The open-close frame 61 is provided with a locking pin hole 65, and the locking pin 68 is fixed in the locking pin hole 65. The open-close frame 61 is provided with a rotating shaft hole 69. In order to ensure the continuity of the chain drive between the intermediate transmission unit 2C and the end transmission unit 2B, the rotating shaft hole 69 of the open-close frame 61 rotationally fits with the central shaft 24 of the intermediate transmission unit 2C at the end of the main frame body 60. The rotation axis of the open-close frame 61 is coaxial with the central shaft 24 of the intermediate transmission unit 2C at the end of the main frame body 60. When the open-close frame 61 rotates, the intermediate transmission unit 2C at the end of the main frame body and the end transmission unit 2B on the open-close frame maintain the transmission relationship.

During the operation of tightening pipeline flange bolts, first open the open-close frames 61, and place the central arc 64 of the main frame body on the pipeline 66. Then close the two open-close frames 61, so that the main frame body 60 and the open-close frames 61 are nested around the pipeline. The six intermediate transmission units 2C and the end transmission units 2B correspond one-to-one with the six fastening bolts 63 of the pipeline flange. Push the main frame body and the open-close frames so that the tightening heads 11 fit onto the hexagonal nuts of the fastening bolts. If the hexagonal socket of the tightening head is not aligned with the hexagonal nut, the spring 67 will be compressed. Rotating the device input shaft 10 will drive the tightening head 11 with the smallest torque resistance to rotate. When the torque of the hexagonal nut rotation increases, another tightening head with smaller twisting resistance begins to rotate and tightens the nut. All nuts are tightened in sequence. If the hexagonal socket of the tightening head is not aligned with the hexagonal nut, the tightening head will also fit into the hexagonal nut during rotation, as shown in FIG. 22.

This embodiment adopts an open-close frame structure that rotates to open or close, allowing the plurality of intermediate transmission units 2C and end transmission units 2B to straddle the pipeline and be arranged around the pipeline corresponding to the positions of the flange bolts. It automatically adjusts and distributes torque to tighten all bolts around the flange.

## Claims

1. A multi-axis tightening device, comprising:
a device input shaft (10);
a plurality of tightening heads (11); and
a plurality of transmission units (20),
wherein each transmission unit (20) includes a first output shaft (21), a second output shaft (22), and an input shaft (23),
wherein the input shaft (23) is configured to drive rotation of the first output shaft (21) and the second output shaft (22),
wherein, in response to resistance to rotation of the first output shaft (21), the input shaft (23) drives rotation of the second output shaft (22), and in response to resistance to rotation of the second output shaft (22), the input shaft (23) drives rotation of the first output shaft (21),
wherein at least one of the first output shaft (21) and the second output shaft (22) of each transmission unit (20) is configured to drive either:
(i) the input shaft (23) of another transmission unit (20), or
(ii) one of the tightening heads (11),
wherein the plurality of transmission units (20) includes a top transmission unit (2A), and
wherein the device input shaft (10) is configured to drive the input shaft (23) of the top transmission unit (2A).

2. The multi-axis tightening device of claim 1, wherein:
the first output shaft (21) and/or the second output shaft (22) of each transmission unit (20) is operatively connected to the input shaft (23) of another transmission unit (20) via a transfer gear train (30),
wherein the transfer gear train (30) is configured to adjust at least one of a rotational direction and a transmission ratio of the input shaft (23),
and wherein the transfer gear train (30) includes:
a transfer output gear (31) disposed on the first output shaft (21) and/or the second output shaft (22), and
a transfer input gear (32) disposed on the input shaft (23).

3. The multi-axis tightening device of claim 2, wherein the transfer gear train (30) further includes an intermediate shaft disposed between the transfer output gear (31) and the transfer input gear (32).

4. The multi-axis tightening device of claim 1, wherein each transmission unit (20) comprises a differential mechanism,
and wherein the first output shaft (21), the second output shaft (22), and the input shaft (23) are respectively coupled to one of:
a left side gear (41), a right side gear (42), and a differential housing (43).

5. The multi-axis tightening device of claim 4, wherein:
the first output shaft (21) is coupled to the left side gear (41);
the second output shaft (22) is coupled to the right side gear (42); and
the input shaft (23) is coupled to the differential housing (43),
wherein the first output shaft (21) extends through the second output shaft (22), and
wherein the first output shaft (21) and the second output shaft (22) extend from a same side of the differential housing (43).

6. The multi-axis tightening device of claim 4, wherein:
the input shaft (23) is coupled to the right side gear (42);
the first output shaft (21) is coupled to the left side gear (41); and
the second output shaft (22) is coupled to the differential housing (43).

7. The multi-axis tightening device of claim 1, wherein each transmission unit (20) comprises a planetary gear mechanism,
and wherein the first output shaft (21), the second output shaft (22), and the input shaft (23) are respectively coupled to one of:
a planet carrier (51), a ring gear (52), and a sun gear (53).

8. The multi-axis tightening device of claim 7, wherein:
the first output shaft (21) is coupled to the planet carrier (51);
the second output shaft (22) is coupled to the ring gear (52); and
the input shaft (23) is coupled to the sun gear (53).

9. The multi-axis tightening device of claim 7, wherein:
the first output shaft (21) is coupled to the planet carrier (51);
the second output shaft (22) is coupled to the sun gear (53); and
the input shaft (23) is coupled to the ring gear (52).
